# EUROPÄISCHE PATENTSCHRIFT

(11) **EP 2 366 062 B1**
(45) Veröffentlichungstag und Bekanntmachung des Hinweises auf die Patenterteilung: **03.10.2012**
(21) Anmeldenummer: 09774871.9
(22) Anmeldetag: 02.12.2009
(51) Int. Cl.: F02C 1/00, F02C 6/18, F02C 9/16, H02P 9/04, F01K 23/10, F02C 3/10, F02C 9/00

(54) **VERFAHREN ZUR STABILISIERUNG DER NETZFREQUENZ EINES ELEKTRISCHEN STROMNETZES**
METHOD FOR STABILIZATION OF THE NETWORK FREQUENCY OF AN ELECTRICAL POWER NETWORK
PROCÉDÉ DE STABILISATION DE LA FRÉQUENCE RÉSEAU D'UN RÉSEAU SECTEUR ÉLECTRIQUE

(30) Priorität: 16.12.2008 DE 102008062588
(43) Veröffentlichungstag der Anmeldung: 21.09.2011
(73) Patentinhaber: Siemens Aktiengesellschaft, 80333 München (DE)
(72) Erfinder: JURETZEK, Uwe, 91058 Erlangen (DE)
(86) Internationale Anmeldenummer: PCT/EP2009/066234
(87) Internationale Veröffentlichungsnummer: WO 2010/072524

(56) Entgegenhaltungen:
- EP-A1- 0 432 753
- WO-A1-87/02755
- GB-A- 932 718
- US-A- 4 184 083
- US-A- 4 529 887

## Beschreibung

Die Erfindung betrifft ein Verfahren zur Stabilisierung der Netzfrequenz eines elektrischen Stromnetzes, bei dem eine mindestens zweiwellige Gasturbine eine Powerturbine und einen Gasgenerator aufweist, wobei die Powerturbine mittels einer ersten Welle mit einem ersten Generator in Drehmomente-übertragender Weise verbunden ist.

Zur Frequenzstützung innerhalb eines Netzverbundes besteht die Auflage für alle Kraftwerksbetreiber eine bestimmte Leistungsreserve bereitzuhalten, welche innerhalb einer vorgegebenen Zeit abgerufen werden kann, grundsätzlich wird dabei in Primar- und Sekundärregelung unterschieden. Die zusätzliche Leistungsabgabe dient dazu, die wegen ungedecktem Leistungsbedarfs (Stromnachfrage im Netz ist größer als Angebot) unter Sollwert befindliche Frequenz wieder auf den Sollwert zurückzuführen.

Die Anforderungen variieren dabei von Netz zu Netz. Nach UCTE (Union for the coordination of transmission of electricity) - Regeln werden z.B. 2% zusätzliche Leistungsabgabe innerhalb 30 Sekunden gefordert (Primärregelung, im allgemeinen spricht man von Primärregelung im Bereich von 10 bis 30 Sekunden, oder allgemein von Frequenzregelung im Sekundenbereich). Diese Leistungsreserve wird dabei mit unterschiedlichen Maßnahmen innerhalb der bereits am Netz befindlichen Energieerzeugungsanlagen bereitgestellt, diese führen zu einer Verschlechterung der Performance der Energieerzeugungsanlagen und zu erhöhtem technischen Aufwand, welcher sich in Kosten niederschlägt.

Darüber hinaus gibt es auch noch netzabhängige Regeln zur Bereitstellung von zusätzlicher Leistung im Bereich von größer 30 Sekunden bis zu 30 Minuten (Sekundärregelung, oder allgemein Frequenzregelung im Minutenbereich), welche neben den bereits am Netz befindlichen Anlagen z.B. auch durch in Bereitschaft stehende Spitzenlastanlagen erbracht werden kann.

Bei Dampfkraftwerken (DKW) erfolgt die Reservevorhaltung im Sekundenbereich mit dem heutigen Stand der Technik unter anderem durch Androsselung der Turbinenventile, das heißt Speicherung von Energie im Kessel, so dass bei Bedarf einfach durch weiteres Öffnen der Turbinenventile, zusätzliche Leistung im Sekundenbereich zur Verfügung gestellt werden kann. Zeitgleich wird auch die Feuerungsleistung erhöht, um die durch die Aufhebung der Androsselung kurzfristig erhöhte Leistung auch dauerhaft bereitstellen zu können.

Die Androsselung der Ventile hat allerdings den Nebeneffekt, dass im Normalbetrieb der Anlagenwirkungsgrad und die absolute Leistung immer negativ beeinflusst werden. Weil eine erhöhte Feuerungsleistung möglich sein muss, führt dies auch zu einer Überdimensionierung des Kessels mit seinen Hilfs - und Nebenanlagen und zu einer verschlechterten Kostenbilanz.

Eine weitere derzeit genutzte Möglichkeit die geforderte Leistungsreserve kurzfristig bereitzustellen (oft in Kombination mit der Turbinenventilandrosselung) ist der sogenannte Kondensatstau. Dabei wird der Anzapfdampf zu den Niederdruckvorwärmern reduziert (ggf. bis auf 0 kg/s). Dieser Dampfmassenstrom steht entsprechend zur Stromerzeugung im Dampfturbosatz zur Verfügung. Die dadurch im Kondensator anfallende erhöhte Kondensatmenge wird zunächst im sogenannten Hotwell zwischengespeichert und nachdem die Feuerungsleistung des Kessels entsprechend erhöht wurde, wird der Hotwell-Level wieder auf das Normalmaß zurückgeführt. Gleichzeitig wird ggf. auch die von der Kondensatpumpe geförderte Kondensatmenge reduziert, um trotz reduziertem Anzapfdampf die Kondensattemperatur zu halten. Um dies insgesamt sicherstellen zu können, muss der befeuerte Kessel und seine Hilfs- und Nebenanlagen entsprechend größer dimensioniert werden (d.h. zusätzliche Kosten). Dementsprechend wird im Normalbetrieb die Anlage im Teillastbereich betrieben, was zu entsprechender Wirkungsgradeinbuße führt.

Aus der EP 0 432 753 A1 ist bereits ein Verfahren bekannt, bei dem eine zweiwellige Gasturbine umfassend eine Powerturbine und ein Gasgenerator mittels einer Welle mit einem Generator verbunden ist.

Ausgehend von den Problemen und Nachteilen des Standes der Technik hat es sich die Erfindung zur Aufgabe gemacht, ein Verfahren der eingangs genannten Art derart weiterzubilden, so dass die Stabilisierung der Netzfrequenz einerseits besonders effektiv erfolgt und andererseits kostengünstig ist.

Zur Lösung der erfindungsgemäßen Aufgabe wird vorgeschlagen, dass die erste Welle der Powerturbine und des ersten Generators permanent mit dem Stromnetz synchronisiert dreht und der Generator die Drehung als Motor antreibt und eine zweite Welle des Gasgenerators permanent mit einer Zünddrehzahl dreht, wobei bei einer Lastanforderung des Gasgenerators gezündet wird und die Powerturbine von dem erzeugten Gas des Gasgenerators angetrieben wird, so dass der Generator Strom erzeugt.

Als Powerturbine wird hier derjenige Turbinenteil der Gasturbine bezeichnet, der zur Erzeugung verwertbarer technischer Arbeit, insbesondere zur Erzeugung elektrischen Stroms nutzbar ist. Hierbei handelt es sich um den Turbinenteil, der nicht zum Antrieb des Verdichters der Gasturbine eingesetzt wird.

Der entscheidende Vorteil der Erfindung liegt darin, dass der zur Erreichung der Schnellstartfähigkeit notwendige Eigenbedarf - einerseits der zweiwelligen Gasturbine durch den Startmotor, der den Gasgenerator auf Zünddrehzahl hält und andererseits der Betrieb des Generators im Motormodus synchron mit der Netzfrequenz - wesentlich geringer ist als die zusätzlich gewonnene Leistung bei gleichem Primärenergieeinsatz beispielsweise in einem Dampfkraftwerk durch Wegfall oder Reduzierung einer etwaigen Turbinenventilandrosselung. Kosteneinsparungen ergeben sich auch dadurch, dass bei Kraftwerken der Kessel mit seinen Hilfs- und Nebenanlagen entsprechend kleiner dimensioniert werden kann, da die zusätzlich benötigte Wärme, welcher Bedarf sich z.B. durch einen Kondensatstauer gibt, nicht im gefeuerten Kessel zugeführt werden muss, was zu Kosteneinsparungen und Leistungsverbesserungen führt. Auf diese Weise können beispielsweise Dampfkraftwerke im Normalbetrieb wirtschaftlicher betrieben werden.

Besondere Vorteile ergeben sich, wenn ein Verfahren im Rahmen einer Nachrüstung eine vorhandene Anlage hinsichtlich der Betriebsweise flexibilisiert, so dass auch schnell auf sich ändernde Märkte reagiert werden kann. Das erfindungsgemäße Verfahren ermöglicht die Installation einer Gasturbine gleichsam als ein "Booster", der vergleichsweise kostengünstig Spitzenlastbedarf abdecken kann, ohne dass die Reserveleistung negativ beeinflusst wird. Die Booster-Funktion des erfindungsgemäßen Verfahrens kann auch vorteilhaft parallel zu herkömmlichen Reserve-Mechanismen beispielsweise von Dampfkraftwerken eingesetzt werden, so dass beispielsweise neben einer Turbinenventilandrosselung zur Bereithaltung einer Leistungsreserve mittels einer Umschaltung auch die erfindungsgemäße Bereitstellung einer Leistungsreserve möglich ist.

Eine vorteilhafte Weiterbildung der Erfindung sieht vor, dass die Gasturbine und der erste Generator einem Dampfkraftwerk zugeordnet sind, welches eine zentrale Steuerung aufweist, welche die Gasturbine und das Dampfkraftwerk steuert, die bei einer Leistungsanforderung an das Dampfkraftkraftwerk, die über einer bestimmten Grenze liegt, eine Zündung des Gasgenerators veranlasst. Diese Erfindung ist besonders vorteilhaft, weil beispielsweise herkömmlich kostenintensive Reserve-Bereithaltungsmechanismen des Dampfkraftwerkes eingespart werden können bzw. ersetzt werden können.

Zweckmäßig weist der Gasgenerator mindestens einen Verdichter, eine Brennkammer und einen Startmotor auf, die mittels einer zweiten Welle in zumindest Drehmomente-übertragender Verbindung stehen. Diese Konfiguration entspricht derjenigen einer herkömmlichen Gasgeneratorseite einer zweiwelligen Gasturbine und ist marktüblich erhältlich.

Weiterhin ist es zweckmäßig, wenn das Dampfkraftwerk mindestens eine Dampfturbine, einen Kessel, einen Kondensator und einen zweiten Generator aufweist, wo der Abgasstrom aus der Gasturbine in einen Abhitzekessel geleitet wird, in dem ein Kreislaufmedium des Dampfkraftwerkes vor Eintritt in den Kessel vorgewärmt wird. Auf diese Weise wird nicht nur die Netzfrequenz mittels der elektrischen Leistung des ersten Generators aus der Powerturbine gestützt, sondern auch zusätzlich die Feuerung des Kessels des Dampfkraftwerkes entlastet, so dass sich ein verbesserter Wirkungsgrad auch bei Spitzenlast ergibt.

Da der Eigenbedarf an Energie in einem größeren Dampfkraftwerk durchaus signifikant ist, kann zur Vereinfachung der Regelung der Gesamtanordnung aus der erfindungsgemäßen Gasturbine und dem Dampfkraftwerk die Leistungsabgabe des ersten Generators zur teilweisen oder vollständigen Deckung des Eigenbedarfs des Dampfkraftwerks zumindest teilweise oder vollständig verwendet werden.

Besonders sinnvoll ist der Einsatz einer Gasweiche zwischen der Gasturbine und dem Abhitzekessel, welche den Abgasstrom entweder durch den Abhitzekessel oder in einen Bypass leitet, der in die Umgebung mündet. Auf diese Weise kann der Gasgenerator bzw. die Gasturbine zunächst weitestgehend unabhängig von dem Dampfkreislauf des Dampfkraftwerkes angefahren werden und der Abhitzekessel mit seinem Eingriff in die Thermodynamik des Dampfkraftwerkes nachfolgend mittels der Gasweiche aktiviert werden. Dies führt zu einer zusätzlichen Beschleunigung der Unterstützung bei Spitzenlast.

Im Interesse eines gesteigerten Wirkungsgrades ist es zweckmäßig, wenn das Kreislaufmedium des Dampfkraftwerkes in einem Betrieb ohne Gasturbinenunterstützung stromabwärts des Kondensators in mindestens einem Vorwärmer aufgeheizt wird, welcher Vorwärmer mittel Anzapfungen aus der Dampfturbine beheizt wird, wobei eine Anzapfmenge mittels Anzapfleitungen von der Dampfturbine zum Vorwärmer geleitet wird.

Weiterhin ist es sinnvoll, wenn das Kreislaufmedium in einem Betrieb mit Gasturbinenunterstützung stromabwärts des Kondensators in Abhitzekesselvorwärmern aufgeheizt wird, die mit dem Abgasstrom aus der Gasturbine beheizt werden. In diesem Zusammenhang ist es sinnvoll, wenn Regelventile in den Anzapfleitungen und in den Abhitzekesselvorwärmerleitungen angeordnet sind, mittels derer bei zunehmender Gasturbinenunterstützung die Anzapfmenge aus der Dampfturbine reduziert wird und die Abhitzekesselvorwärmermenge erhöht wird. Dieser thermodynamische Eingriff in den Kreislauf des Dampfkraftwerks hat zusätzlich neben einer Entlastung des Kessel des Dampfkraftwerkes auch eine höhere Leistungsabgabe der Dampfturbine zur Folge, so dass das erfindungsgemäße Verfahren zunächst eine schnelle, rein elektrische Unterstützung aus dem mittels des ersten Generators erzeugen Energie schafft und nachfolgend das Dampfkraftwerk zusätzlich thermodynamisch unterstützt, so dass einerseits der Wirkungsgrad der Gesamtanordnung steigt und andererseits eine zusätzliche Steigerung der Gesamtleistung erfolgt.

Im Interesse einer möglichst schnellen auch thermodynamischen Unterstützung in vorab beschriebener Weise durch die Gasturbine ist es zweckmäßig, wenn während des Betriebs ohne Gasturbinenunterstützung der Abhitzekessel auf einer Mindesttemperatur gehalten wird, so dass der Abgasstrom mittels der Gasweiche möglichst zeitnah zum Zünden des Gasgenerators durch den Abhitzekessel zur Vorwärmung des Kreislaufmediums des Dampfkraftwerks geleitet werden kann.

Im Folgenden ist die Erfindung anhand eines speziellen Ausführungsbeispiels unter Bezugnahme auf eine Zeichnung zur Verdeutlichung näher beschrieben. Für den Fachmann ergeben sich aus diesen Ausführungen zusätzliche Möglichkeiten, die Erfindung auszuführen, die von dem speziellen Ausführungsbeispiel abweichen können. Es zeigt:

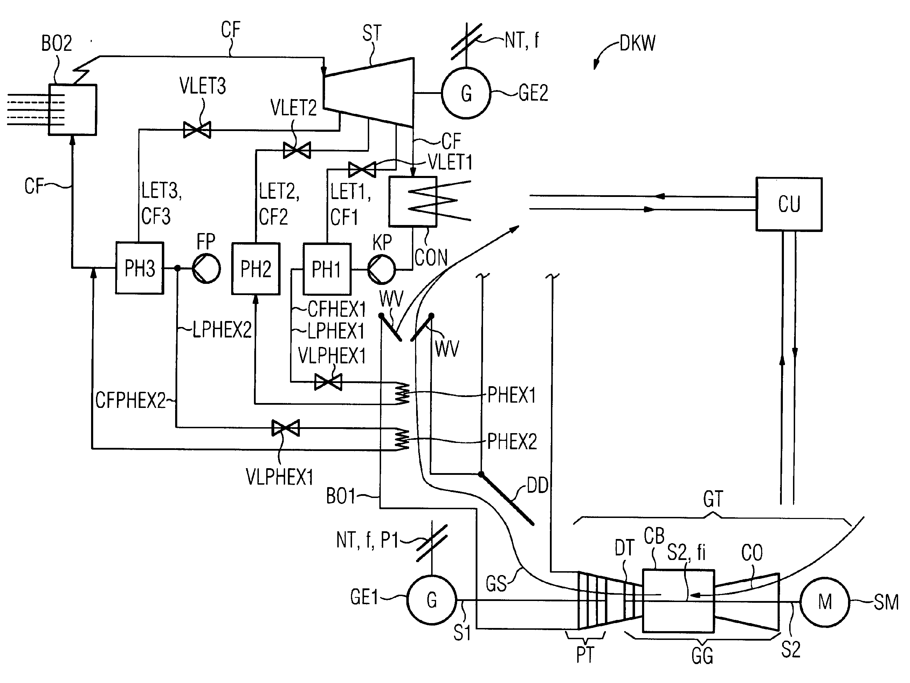

- Figur 1:: eine schematische Übersicht über die Verschaltung und Funktionsweise verschiedener Anlagekomponenten nach dem erfindungsgemäßen Verfahren.

Die Figur zeigt eine schematische Übersicht über eine Anlage mit einem Dampfkraftwerk DKW und einer Gasturbine GT mit einem ersten Generator GE1, die nach dem erfindungsgemäßen Verfahren betrieben wird. Der erste Generator GE1 ist ebenso wie ein zweiter Generator GE2 an ein elektrisches Stromnetz NT mit einer Netzfrequenz f des Wechselstroms angeschlossen und drehen jeweils mit einer Drehzahl, die der Netzfrequenz f entspricht.

Die Gasturbine GT umfasst zwei Wellen S1, S2, wobei eine erste Welle S1 den ersten Generator GE1 mit einer Powerturbine PT in Drehmoment-übertragender Weise verbindet und eine zweite Welle S2 einen Startermotor SM mit einer Antriebsturbine DT und einem Kompressor CO in Drehmoment-übertragender Weise verbindet. Gemeinsam mit einer Brennkammer CB bildet der Startermotor SM, der Kompressor CO, und die Antriebsturbine DT einen Gasgenerator GG, welcher im Bedarfsfall Heißgas GS zum Antrieb des ersten Generators GE1 erzeugt. Zur Stabilisierung der Netzfrequenz f bei einer ggf. plötzlichen Leistungsanforderung wird der Gasgenerator GG gestartet und die Powerturbine PT mittels des Heißgases GS angetrieben, so dass der erste Generator GE1 die erzeugte elektrische Leistung P1 in das Netz NT einspeisen kann. Damit ein Start des Gasgenerators GG möglichst zügig erfolgen kann, dreht der Startermotor SM die zweite Welle S2 permanent bei einer Zünddrehzahl fI, so dass nach einer durch eine zentrale Steuerung CU veranlassten Zündung der Brennkammer CB der Gasgenerator GE innerhalb kürzester Zeit das erforderliche Heißgas GS erzeugt. Die nach dem erfindungsgemäßen Verfahren betriebene Gasturbine GT ist in diesem Ausführungsbeispiel an das Dampfkraftwerk DKW angegliedert und die von der Gasturbine GT bzw. den ersten Generator GE1 erzeugte Leistung P1 wird teilweise zur vollständigen Deckung des Eigenbedarfs des Dampfkraftwerks DKW und der Gasturbine GT verwendet. Die Überschüsse der erzeugten Leistung P1 werden in das Netz NT eingespeist. Die zentrale Steuerung CU steuert sowohl die Prozesse der Gasturbine GT bzw. des ersten Generators GE1 als auch diejenigen des gesamten Dampfkraftwerks DKW.

Neben der regelungstechnischen und elektrischen Kopplung zwischen dem Dampfkraftwerk DKW und der erfindungsgemäßen Verfahren betriebenen Gasturbine GT bzw. dem ersten Generator GE1 sieht dieses Ausführungsbeispiel auch eine thermodynamische Kopplung zwischen der Gasturbine GT und dem Kreislauf des Dampfkraftwerkes DKW im Bedarfsfall bzw. bei einem Betrieb mit Gasturbinenunterstützung vor.

Das Dampfkraftwerk DKW weist eine in Zirkulationsrichtung eines Kreislaufmediums CF aufgezählt folgende Komponenten auf: Dampfturbine ST, Kondensator CON, Kondensatpumpe CP, erster Vorwärmer PH1, zweiter Vorwärmer PH2, Speisepumpe FP, dritter Vorwärmer PH3, zweiter Kessel B02. An die Dampfturbine ST ist ein zweiter Generator GE2 in Drehmoment-übertragender Weise angekoppelt und mit der Netzfrequenz f synchronisiert. Die Dampfturbine ST ist an drei verschiedenen Stellen unterschiedlicher Temperaturen und unterschiedlichen Druckes mittels Anzapfleitungen LET1, LET2, LET3, durch welche jeweils eine Anzapfmenge CF1, CF2, CF3 des Kreislaufmediums geleitet wird angezapft. Entsprechend ihrer Temperatur und ihres jeweiligen Anzapfdruckes werden die Anzapfmengen CF1, CF2, CF3 auf die drei Vorwärmer PH1, PH2, PH3 aufgeteilt, so dass der erste Vorwärmer PH1 die Anzapfmenge CF1 des niedrigsten Druckes und der niedrigsten Temperatur zur Aufheizung erhält und der dritte Vorwärmer PH3 die Anzapfmenge CF3 mit der höchsten Temperatur.

Bei einem Betrieb mit thermodynamischer Unterstützung durch die Gasturbine GT werden die Vorwärmer PH1, PH2, PH3 zumindest teilweise mittels Abhitzekesselvorwärmern PHEX1, PHEX2 unterstützt, zu denen Abhitzekesselvorwärmeleitungen LPHEX1, LPHEX2 Abhitzekesselvorwärmmengen CFPHEX1, CFPHEX2 des Kreislaufmediums CF leiten. In den Vorwärmerleitungen LET1 bis LET3 und in den Abhitzekesselvorwärmerleitungen LPHEX1, LPHEX2 sind jeweils Vorwärmerleitungsventile VLET1, VLET2, VLET3 bzw. Abhitzekesselvorwärmerleitungsventile VLPHEX1, VLPHEX2 vorgesehen. Mittels dieser Ventile lässt sich die Anzapfmenge aus der Dampfturbine ST des Kreislaufmediums CF reduzieren und die Abhitzekesselvorwärmermenge CFPHEX1 bzw. CFPHEX2 erhöhen, so dass ein Abgasstrom EX in dem Abhitzekessel B02 die Vorwärmung des Kreislaufmediums übernimmt.

Das Abgas EX aus dem Gasgenerator GG bzw. der Powerturbine PT erreicht zunächst eine Gasweiche DD, welche den Abgasstrom EX entweder über einen Bypass BY in die Umgebung EV leitet oder in einen Abhitzekessel B02. Der Abhitzekessel BO2 mündet nach Abkühlung des Abgases EX ebenfalls in die Umgebung EV. Für den Fall dass der Abgasstrom nicht über den Abhitzekessel geleitet wird, reduziert eine dann geschlossene Regenklappe WV etwaige Wärmeverluste (Stand-by-Betrieb).

Der Abhitzekessel B02 wird während des Betriebes oberhalb einer Mindeststarttemperatur gehalten, so dass eine schnelle thermische Ankopplung des Abhitzekessels B02 an den Kreislauf des Dampfkraftwerkes erfolgen kann. Hierzu wird im Betrieb ohne Gasturbinenunterstützung ein Teil des Kreislaufmediums CF über die Abhitzekesselvorwärmerleitungen LPHEX1, LPHEX2 durch den Abhitzekessel B02 geleitet.

## Patentansprüche

1. Verfahren zur Stabilisierung der Netzfrequenz(f) eines elektrischen Stromnetzes (NT), bei dem eine mindestens zweiwellige Gasturbine (GT) eine Powerturbine (PT) und einen Gasgenerator (GG) aufweist, wobei die Powerturbine (PT) mittels einer Welle (S1) mit einem ersten Generator (GE1) in Drehmomente-übertragender Weise verbunden ist,
**dadurch gekennzeichnet, dass**
die erste Welle (S1) der Powerturbine (PT) und des ersten Generators (GE1) permanent mit dem Stromnetz (NT) synchronisiert dreht und der erste Generator (GE1) die Powerturbine (PT) als Motor antreibt und
eine zweite Welle (S2) des Gasgenerators (GG) permanent mit einer Zünddrehzahl (fI) dreht,
wobei bei einer Leistungsanforderung der Gasgenerator (GG) gezündet wird und die Powerturbine (PT) von erzeugtem Heißgas (GS) des Gasgenerators (GG) angetrieben wird, so dass der erste Generator (GE1) Strom (P) erzeugt.

2. Verfahren nach Anspruch 1,
wobei die Gasturbine (GT) und der erste Generator (GE1) einem Dampfkraftwerk (DKW) zugeordnet sind, welches eine zentrale Steuerung (CU) aufweist, die Gasturbine (GT) und das Dampfkraftwerk (DKW) steuert und welche Steuerung (CU) bei einer Leistungsanforderung an das Dampfkraftwerk (DKW), die über einer bestimmten Grenze (L1) liegt, eine Zündung des Gasgenerators (GG) veranlasst.

3. Verfahren nach einem der vorhergehenden Ansprüche 1 oder 2, wobei der Gasgenerator (GG) mindestens einen Verdichter (CO), eine Brennkammer (CB) und einen Startmotor (SM) aufweist, die mittels der zweiten Welle (S2) in Drehmoment-übertragender Verbindung miteinander stehen.

4. Verfahren nach mindestens dem vorhergehenden Anspruch 2, wobei das Dampfkraftwerk (DKW) mindestens eine Dampfturbine (ST), einen ersten Kessel (BO1), einen Kondensator (CON) und einen zweiten Generator (GE2) aufweist und ein Abgasstrom (EX) aus der Gasturbine (GT) in einen Abhitzekessel (BO2) geleitet wird, in dem ein Kreislaufmedium (CF) des Dampfkraftwerks (DKW) vor Eintritt in den ersten Kessel (BO1) mittels des Abgasstroms (EX) vorgewärmt wird.

5. Verfahren nach Anspruch 2, 3 oder 4,
wobei die Leistungsabgabe des ersten Generators (GE1) zur teilweisen oder vollständigen Deckung eines Eigenbedarfs des Dampfkraftwerks (DKW) teilweise oder vollständig verwendet wird.

6. Verfahren nach mindestens dem vorhergehenden Anspruch 4,
wobei eine Gasweiche (DD) zwischen der Gasturbine (GT) und dem Abhitzekessel (BO2) angeordnet ist, welche den Abgasstrom (EX) entweder durch den Abhitzekessel (BO2) oder in einem Bypass (BY) leitet, der in die Umgebung (EV) mündet.

7. Verfahren nach mindestens einem der vorhergehenden Ansprüche 2 bis 6,
wobei das Kreislaufmedium (CF) in einem Betrieb ohne Gasturbinenunterstützung stromabwärts des Kondensators (CON) in mindestens einem Vorwärmer (PH1, PH2, PH3) aufgeheizt wird, welcher Vorwärmer (PH1, PH2, PH3) mittels Anzapfungen aus der Dampfturbine (ST) beheizt wird, wobei eine Anzapfmenge (CF1, CF2, CF3) mittels Anzapfleitungen (LET1, LET2, LET3) von der Dampfturbine (ST) zum Vorwärmer (PH1, PH2, PH3) geleitet wird.

8. Verfahren nach mindestens einem der vorhergehenden Ansprüche 4 bis 7,
wobei das Kreislaufmedium (CF) in einem Betrieb mit Gasturbinenunterstützung stromabwärts des Kondensators (CON) in Abhitzekesselvorwärmern (PHEX1, PHEX2) aufgeheizt wird, die mit dem Abgasstrom (EX) beheizt werden.

9. Verfahren nach den Ansprüchen 7 und 8,
wobei Regelventile (VLET1, VLET2, VLET3) in den Anzapfleitungen (LET1, LET2, LET3) angeordnet sind und in Abhitzekesselvorwärmerleitungen (LPHEX1, LPHEX2) Regelventile (VLPHEX1, VLPHEX2) angeordnet sind, wobei mittels der Regelventile (VLEXT1, VLET2, VLET3) bei zunehmender Gasturbinenunterstützung die Anzapfmenge (CF1, CF2, CF3) reduziert wird und mittels der Regelventil (VLPHEX1, VLPHEX2) die Abhitzekesselvorwärmermenge (CFPHEX1, CFPHEX2) erhöht wird.

10. Verfahren nach mindestens einem der vorhergehenden Ansprüche 4 bis 9,
wobei während eines Betriebes ohne Gasturbinenunterstützung der Abhitzekessel (BO2) auf einer Mindesttemperatur gehalten wird.

## Claims

1. Method for stabilization of the grid system frequency (f) of an electrical grid system (NT), in which a gas turbine (GT) which has at least two shafts has a power turbine (PT) and a gas generator (GG), wherein the power turbine (PT) is connected by means of a shaft (S1) to a first generator (GE1) in a torque-transmitting manner,
**characterized in that**
the first shaft (S1) of the power turbine (PT) and of the first generator (GE1) rotates permanently synchronized to the grid system (NT) and the first generator (GE1) drives the power turbine (PT) as a motor, and
a second shaft (S2) of the gas generator (GG) rotates permanently at an initiation rotation speed (fI), wherein, when there is a power demand, the gas generator (GG) is initiated and the power turbine (PT) is driven by the hot gas (GS) produced by the gas generator (GG), such that the first generator (GE1) generates electricity (P).

2. Method according to Claim 1,
wherein the gas turbine (GT) and the first generator (GE1) are associated with a steam power station (DKW) which has a central control system (CU) which controls the gas turbine (GT) and the steam power station (DKW), and which control system (CU) causes initiation of the gas generator (GG) when there is a power demand on the steam power station (DKW) which exceeds a specific limit (L1).

3. Method according to one of the preceding Claims 1 or 2, wherein the gas generator (GG) has at least one compressor (CO), one combustion chamber (CB) and one starter motor (SM), which are connected to one another by means of the second shaft (S2) in a torque-transmitting manner.

4. Method according to at least the preceding Claim 2, wherein the steam power station (DKW) has at least one steam turbine (ST), a first boiler (BO1), a condenser (CON) and a second generator (GE2), and an exhaust gas flow (EX) from the gas turbine (GT) is passed into a waste-heat boiler (B02), in which a circulating medium (CF) in the steam power station (DKW) is preheated by means of the exhaust-gas flow (EX) before entering the first boiler (BO1).

5. Method according to Claim 2, 3 or 4,
wherein the power output from the first generator (GE1) is used to partially or completely to cover the own demand of the steam power station (DKW).

6. Method according to at least the preceding Claim 4,
wherein a gas switch (DD) is arranged between the gas turbine (GT) and the waste-heat boiler (B02) and passes the exhaust-gas flow (EX) either through the waste-heat boiler (B02) or to a bypass (BY) which opens into the environment (EV).

7. Method according to at least one of the preceding Claims 2 to 6,
wherein the circulating medium (CF) is heated in at least one preheater (PH1, PH2, PH3) downstream from the condenser (CON) during operation without support from the gas turbine, which preheater (PH1, PH2, PH3) is heated by means of bleeds from the steam turbine (ST), wherein a bleed amount (CF1, CF2, CF3) is passed from the steam turbine (ST) to the preheater (PH1, PH2, PH3) by means of bleed lines (LET1, LET2, LET3).

8. Method according to at least one of the preceding Claims 4 to 7,
wherein the circulating medium (CF) is heated in waste-heat boiler preheaters (PHEX1, PHEX2) which are heated by the exhaust-gas flow (EX), downstream from the condenser (CON) during operation with support from the gas turbine.

9. Method according to Claims 7 and 8,
wherein control valves (VLET1, VLET2, VLET3) are arranged in the bleed lines (LET1, LET2, LET3), and control valves (VLPHEX1, VLPHEX2) are arranged in the waste-heat boiler preheater lines (LPHEX1, LPHEX2), wherein the bleed amount (CF1, CF2, CF3) is reduced by means of the control valves (VLEXT1, VLET2, VLET3) when the support from the gas turbine increases, and the waste-heat boiler preheater amount (CFPHEX1, CFPHEX2) is increased by means of the control valves (VLPHEX1, VLPHEX2).

10. Method according to at least one of the preceding Claims 4 to 9,
wherein the waste-heat boiler (B02) is kept at a minimum temperature during operation without support from the gas turbine.

## Revendications

1. Procédé de stabilisation de la fréquence ( f ) d'un réseau ( NT ) de courant électrique, dans lequel une turbine ( GT ) à gaz à au moins deux arbres comporte une turbine ( PT ) de puissance et un gazogène ( GG ), la turbine ( PT ) de puissance étant reliée de manière à transmettre des couples de rotation au moyen d'un arbre ( S1 ) à une première génératrice ( GE1 ), **caractérisé en ce que**
le premier arbre ( S1 ) de la turbine ( PT ) de puissance et de la première génératrice ( GE1 ) tournent de manière synchronisée en permanence avec le réseau ( NT ) de courant et la première génératrice ( GE1 ) entraîne en moteur la turbine ( PT ) de puissance et
un deuxième arbre ( S2 ) du gazogène ( GG ) tourne en permanence avec un nombre ( fI ) de tours d'allumage,
dans lequel, pour une demande de puissance, le gazogène ( GG ) est amorcé et la turbine ( PT ) de puissance est entraînée par du gaz ( GS ) chaud produit du gazogène ( GG ), de manière à ce que la première génératrice ( GE1 ) produise du courant ( P ).

2. Procédé suivant la revendication 1,
dans lequel la turbine ( GT ) à gaz et la première génératrice ( GE1 ) sont associées à une centrale ( DKW ) électrique thermique, qui a une commande ( CU ) centrale, qui commande la turbine ( GT ) à gaz et la centrale ( DKW ) électrique thermique, et laquelle commande ( CU ) provoque, lors d'une demande de puissance sur la centrale ( DKW ) électrique thermique, qui est supérieure à une limite ( L1 ) déterminée, un allumage du gazogène ( GG ).

3. Procédé suivant l'une des revendications précédentes 1 ou 2, dans lequel le gazogène ( GG ) comporte au moins un compresseur ( CO ), une chambre de combustion ( CB ) et un moteur ( SM ) de démarrage, qui sont en liaison les uns avec les autres, de manière à transmettre un couple de rotation au moyen du deuxième arbre ( S2 ).

4. Procédé suivant au moins la revendication 2 précédente,
dans lequel la centrale ( DKW ) électrique thermique comporte au moins une turbine ( ST ) à vapeur, une première chaudière ( VO1 ), un condenseur ( CON ) et une deuxième génératrice ( GE2 ), et un courant ( EX ) de gaz d'échappement est envoyé de la turbine ( GT ) à gaz dans une chaudière ( BO2 ) de récupération de la chaleur perdue, dans laquelle un fluide ( CF ) en circulation de la centrale ( DKW ) électrique thermique est préchauffé avant l'entrée dans la première chaudière ( VO1 ) au moyen du courant ( EX ) de gaz d'échappement.

5. Procédé suivant la revendication 2, 3 ou 4,
dans lequel la puissance cédée par la première génératrice ( GE1 ) est utilisée en tout ou partie pour couvrir en tout ou partie un besoin propre de la centrale ( DKW ) électrique thermique.

6. Procédé suivant au moins la revendication 4 précédente,
dans lequel il est monté, entre la turbine ( GT ) à gaz et la chaudière ( BO2 ) à récupération de la chaleur perdue, un aiguillage ( DD ) de gaz, qui conduit le courant ( EX ) de gaz d'échappement dans la chaudière ( BO2 ) à récupération de la chaleur perdue ou dans une dérivation ( BY ) qui débouche à l'atmosphère ( EV ).

7. Procédé suivant au moins l'une des revendications précédentes 2 à 6,
dans lequel le fluide ( CF ) en circuit est chauffé dans un fonctionnement sans assistance de la turbine à gaz en aval du condensateur ( CON ) dans au moins un préchauffeur ( PH1, PH2, PH3 ), lequel préchauffeur ( PH1, PH2, PH3 ) est chauffé au moyen de soutirages de turbine ( ST ) à vapeur, dans lequel une quantité ( CF1, CF2, CF3 ) soutirée au moyen de conduits ( LET1, LET2, LET3 ) de soutirage est envoyée de la turbine ( ST ) à vapeur au préchauffeur ( PH1, PH2, PH3 ).

8. Procédé suivant au moins l'une des revendications précédentes 4 à 7,
dans lequel le fluide ( CF ) en circuit est chauffé dans un fonctionnement avec assistance de la turbine à gaz en aval du condenseur ( CON ) dans des préchauffeurs ( PHEX1, PHEX2 ) de la chaudière à récupération de la chaleur perdue, préchauffeurs qui sont chauffés par le gaz ( EX ) d'échappement.

9. Procédé suivant les revendications 7 et 8,
dans lequel des vannes ( VLET1, VLET2, VLET3 ) de régulation sont montées dans les conduits ( LET1, LET2, LET3 ) de soutirage et des vannes ( VLPHEX1, VLPHEX2 ) de régulation sont montées dans des conduits ( LPHEX1, LPHEX2 ) de préchauffeurs de la chaudière à récupération de la chaleur perdue, dans lequel, au moyen des vannes ( VLEXT1, VLET2, VLET3 ) de régulation, on réduit, lorsque l'assistance de turbine à gaz augmente la quantité ( CF1, CF2, CF3 ) soutirée, et, au moyen de la vanne ( VLPHEX1, VLPHEX2 ) de régulation, on augmente la quantité ( CFPHEX1, CFPHEX2 ) de préchauffeurs de la chaudière à récupération de la chaleur perdue.

10. Procédé suivant au moins l'une des revendications précédentes 4 à 9,
dans lequel, pendant un fonctionnement sans assistance de la turbine à gaz, on maintient la chaudière ( BO2 ) à récupération de la chaleur perdue à une température minimum.
